(19) Europäisches Patentamt
European Patent Office
Office européen des brevets

(11) **EP 3 173 779 B1**

(12) **EUROPÄISCHE PATENTSCHRIFT**

(45) Veröffentlichungstag und Bekanntmachung des Hinweises auf die Patenterteilung:
**15.05.2019 Patentblatt 2019/20**

(51) Int Cl.:
***G01N 27/417*** *(2006.01)*   *G01N 27/407* *(2006.01)*
***G01N 27/416*** *(2006.01)*

(21) Anmeldenummer: **16020467.3**

(22) Anmeldetag: **26.11.2016**

(54) **VERFAHREN ZUR FUNKTIONSÜBERPRÜFUNG EINES GASSENSORS**

METHOD FOR TESTING THE FUNCTION OF A GAS SENSOR

PROCÉDÉ D'ANALYSE DE FONCTIONNEMENT D'UN CAPTEUR DE GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2015 DE 102015015218**

(43) Veröffentlichungstag der Anmeldung:
**31.05.2017 Patentblatt 2017/22**

(73) Patentinhaber: **LAMTEC Meß- und Regeltechnik für Feuerungen GmbH**
**69190 Walldorf (DE)**

(72) Erfinder:
• **Weber, Harald**
  **76684 Östringen (DE)**
• **Hammer, Frank**
  **75015 Bretten (DE)**

(56) Entgegenhaltungen:
DE-A1-102006 027 574    DE-A1-102013 210 859
DE-A1-102013 223 049    DE-C2- 4 428 954
US-B1- 6 342 151

**Beschreibung**

Die Erfindung geht aus von einem Verfahren zur Funktionsüberprüfung eines Gassensors in einem Messgasraum, wobei als Gassensor ein Aufbau mit einem den Messgasraum von einem Referenzgasraum trennenden Festelektrolyten, einer ersten und einer zweiten Messelektrode, die beide messgasseitig auf dem Festelektrolyten aufgebracht sind, und einer Referenzelektrode, die referenzgasseitig auf dem Festelektrolyten aufgebracht ist, verwendet wird, wobei eine erste Messspannung zwischen der ersten Messelektrode und der Referenzelektrode erfassbar ist, die abhängt von dem Verhältnis der Partialdrücke eines ersten Gasbestandteils an der Messgasseite und der Referenzgasseite, wobei eine zweite Messspannung zwischen der zweiten Messelektrode und der Referenzelektrode erfassbar ist , die abhängt von dem Partialdruck eines oder mehrerer Gasbestandteile des Messgases, gemäß dem Oberbegriff des Anspruchs 1.

Ein solcher Gassensor, der Gegenstand der Funktionsüberprüfung ist, ist nach dem Prinzip eines potentiometrischen Festelektrolytsensors aufgebaut und beispielsweise aus der DE 44 28 954 C2 bekannt. Der dort offenbarte Gassensor wird durch ein Sensorelement und ein Gehäuse gebildet. Das Sensorelement weist ein einseitig geschlossenes, bei erhöhter Temperatur Sauerstoff-Ionen-leitendes Festelektrolytrohr aus Yttrium-stabilisierter Zirkondioxidkeramik auf. Der Innenraum des einseitig geschlossenen Festelektrolytrohrs ist gasdicht von dessen Außenraum getrennt. Der Innenraum des Festelektrolytrohrs bildet den Referenzgasraum, der Außenraum bildet den Messgasraum. Auf der Innenseite des Festelektrolytrohres ist eine Referenzelektrode aus Platin dauerhaft aufgebracht. Auf der Außenfläche des Festelektrolytrohres sind im Abstand voneinander zwei Messelektroden angeordnet. Eine erste Messelektrode ist oxidationskatalytisch aktiv, sie ist aus Platin gefertigt. Die zweite Messelektrode ist oxidationskatalytisch weniger aktiv, jedoch elektrokatalytisch aktiv. Sie wird aus einer Platinlegierung gefertigt, beispielsweise Pt/Au oder Pt/Ag. Die zwischen der ersten Messelektrode und der Referenzelektrode gebildete Teilzelle verhält sich wie eine Nernst-Zelle, wie ein potentiometrischer Sauerstoffsensor. Ein Messpotential, das sich zwischen der ersten Messelektrode und der Referenzelektrode ausbildet, bildet das logarithmische Verhältnis der Sauerstoff-Partialdrücke an der Messelektrode und an der Referenzelektrode ab. Durch die Herabsetzung der katalytischen Aktivität der zweiten Messelektrode wird die katalytisch unterstützte Reaktion oxidierbarer Gasbestandteile, wie z.B. CO, $H_2$, $C_nH_m$, etc. mit $O_2$ an der Elektrodenoberfläche behindert. Als Sensorspannung erhält man zwischen der zweiten Messelektrode und der Referenzelektrode daher ein Mischpotential, bestehend aus einem Anteil in Abhängigkeit der $O_2$-Reaktion und einem Anteil infolge der Reaktion mit oxidierbaren Gasbestandteilen. Bereits bei geringer Konzentration oxidierbarer Gase wie CO, $H_2$, $C_nH_m$ erhält man ein sehr hohes Mischpotential-Signal. Das macht einen solchen Sensor sehr geeignet, um in einer Feuerungsanlage die Verbrennungsqualität zu überwachen und als Messfühler in Verbindung mit einer Feuerungsüberwachungsvorrichtung oder einer Feuerungs-Regelungs und - Optimierungsvorrichtung eingesetzt zu werden. Die Grundzüge hierzu sind in dem Aufsatz CO-Regelung, Sonderdruck aus Gaswärme International, Heft 07/2003, S. 448 - 450, Vulkan-Verlag GmbH, Essen erläutert anhand eines Gassensors der Firma Lamtec mit der Produktbezeichnung Kombisonde KS1-D. Dieser Gassensor verfügt messgasseitig über zwei getrennte Elektroden, eine Elektrode für Sauerstoff und eine Elektrode für brennbare Gase.

Ein Gassensor, der Gegenstand des vorliegenden Verfahrens zur Funktionsüberprüfung ist, kann auch eine Sensorzelle mit einem Festelektrolyten in anderer Form haben. Es sind beispielsweise Festelektrolyt-Gassensoren bekannt mit planaren Zirkondioxidelementen oder mit mehreren Schichten von planaren Kermikplättchen. Auch ein solcher Gassensor kann Gegenstand des vorliegenden Verfahrens zur Funktionsüberprüfung sein.

Typisches Einsatzgebiet eines solchen Gassensors ist die Verbrennungsüberwachung oder -regelung in einer Feuerungsanlage, in der Brennstoffe wie Öl oder Gas oder Holz oder Kohle verbrannt werden. Hier wird mittels des Gassensors die Zusammensetzung des Verbrennungsabgases im Abgasstrom, sei es noch im Verbrennungsraum oder im Abgasrohr, erfasst und überwacht. Aus den Signalen des Gassensors erhält die Brennerregelungsvorrichtung oder das Feuerungsmanagementsystem Informationen darüber, ob die Verbrennung vollständig, also mit hohem Wirkungsgrad und niedrigem Schadstoffausstoß, abläuft oder nicht.

Gassensoren, die mit einem keramischen Festelektrolyten arbeiten, und beispielsweise, aber nicht ausschließlich, nach dem Prinzip eines potentiometrischen Festelektrolytsensors aufgebaut sind, sind hierfür besonders geeignet, weil sie direkt im Abgasstrom den im Abgas noch vorhandenen Restsauerstoffgehalt und/oder den Gehalt an unverbrannten Brennstoffbestandteilen erfassen können. Unverbrannte Brennstoffbestandteile, aus deren Vorhandensein im Abgas sich Rückschlüsse auf die Qualität der Verbrennung schließen lassen, sind beispielsweise Kohlenmonoxid CO, Wasserstoff $H_2$, Kohlenwasserstoffe $C_nH_m$. Die Summe der unverbrannten Bestandteile wird nachfolgend mit COe bezeichnet. Deren Erfassung erfolgt an der katalytisch weniger aktiven, zweiten Messelektrode des oben beschriebenen potentiometrischen Festelektrolytsensors. Diese wird daher im Folgenden auch als COe - Elektrode bezeichnet. Die katalyytisch aktive Elektrode, mit der der Sauerstoffgehalt im Abgas gemessen wird, wird im Folgenden auch kurz als $O_2$-Elektrode bezeichnet.

Keramische Festelektrolytsensoren eignen sich aufgrund ihrer hohen Betriebstemperatur und ihrer Robustheit gut für den in-situ-Einsatz, direkt im Abgasstrom einer Feuerungsanlage. Dazu wird das Gassensorelement in einer Einbauarmatur untergebracht, hier auch als Gassensorvorrichtung bezeichnet, und durch eine Öffnung in der Abgasrohrwand in dem Abgasstrom platziert. Es entfällt hierbei die Notwendigkeit einer Messgasentnahme und Messgasaufbereitung, wie sie bei anderen ex-situ Gasanalysatoren erforderlich ist. Das erlaubt eine kostengünstige, direkte in-situ-Erfassung der die Verbrennungsqualität indizierenden Gasbestandteile und eine verzögerungsfreie Echtzeitmessung, was für eine präzise und schnelle Brennerregelung von Vorteil ist.

Bei den Festkörperelektrolyt-Sensoren kann es im Laufe der Betriebszeit zu alterungsbedingten Veränderungen des Sensorverhaltens und auch zu Ausfällen kommen. Ein Festelektrolyt COe-Sensor würde beispielsweise in einem fehlerhaften Zustand trotz vorhandenem unverbrannten Gasbestandteilen im Abgas eine nur geringe Sensorspannung abgeben, woraus die Brennerregelung dann den Fehlschluss ziehen könnte, die Verbrennung laufe sauber. Um den Wirkungsgrad zu erhöhen, würde die Brennerregelung dann möglicherweise die Menge an zugeführter Verbrennungsluft noch weiter reduzieren, wodurch die Verbrennung schließlich immer weiter in den Bereich der Unvollständigkeit hineingefahren würde und schließlich eine schädlich hohe Menge an CO erzeugen würde. Ein Festkörper-Elektrolyt $O_2$-Sensor würde in einem fehlerhaften Zustand beispielsweise nicht den tatsächlichen, sondern einen davon abweichenden, z.B. verringerten und damit falschen $O_2$-Anteil liefern, woraus die Brennerregelung dann den Fehlschluss ziehen könnte, die Menge an zugeführter Verbrennungsluft zu erhöhen, wodurch die Verbrennung schließlich immer weiter in den Bereich des Luftüberschusses mit entsprechendem Wirkungsgradverlust hineinfahren würde. Ein fehlerhafter Zustand des Sensors kann unterschiedliche Ursachen haben. Beispielsweise könnten die Mess-Elektroden altern oder sich ablösen oder durch Sensorgifte verändert werden, oder die Heizwendel könnte altern, wodurch der Sensor trotz korrekt anliegender Heizleistung nicht seine erforderliche Betriebstemperatur erreicht, oder es könnte ein Kabelbruch vorliegen, oder es könnten sich Veränderungen in den Signalleitungen oder den Schweiß- und Lötstellen eingestellt haben. Eine weitere Quelle möglicher Sensorbeeinträchtigungen sind Ablagerungen, etwa aus dem Abgas des Brenners oder durch abgedampftes Isolationsmaterial aus dem Bereich der Sensorbefestigung. Solche Ablagerungen stören die Wechselwirkungen der Gasmoleküle mit den Elektroden und dem Festkörperelektrolyten an der Dreiphasengrenze, so dass ein fehlerhaftes Sensorsignal erzeugt wird, auch wenn ansonsten die Elektroden und die Heizung in Ordnung sind und keine weiteren Alterungseffekte zeigen.

Die Funktionstüchtigkeit des Sensors ist im Zusammenspiel mit der Brennerregelung eine sicherheitsrelevante Funktion des Systems Feuerungsanlage. Wenn der Sensor fehlerhafte Informationen liefert, kann die Brennersteuerung die Feuerungsanlage in einen fehlerhaften und möglicherweise sogar gefährlichen Betriebszustand fahren. Daher ist es wünschenswert, ein Verfahren zur Überprüfung der Funktionstüchtigkeit des Gassensors zu haben und möglichst einfach und problemlos anwenden zu können.

Es ist bekannt, das Gassensorelement mittels eines Plausibilitätschecks im eingebauten Zustand zu überprüfen. Dazu wird durch die Brennerregelung das Brennstoff-LuftVerhältnis kurzzeitig so verändert, dass es zu einer Reaktion des Gassensorelementes kommen muss, also kurzzeitig beispielsweise in der fetten Bereich oder in den sehr mageren Bereich fahren. Weicht dann die Sensorreaktion von der Erwartung ab, wird z.B. keine Reaktion des Sensors erfasst oder eine zu schwache Reaktion, so ist das ein Hinweis darauf, dass mit dem Gassensor etwas nicht in Ordnung sein könnte. Diese Art der Funktionsüberprüfung kann jedoch nicht unabhängig von der Einbauumgebung des Gassensorelementes durchgeführt werden.

Zur Erfüllung einschlägiger Normen der funktionalen Sicherheit, beispielsweise der internationalen Normung gemäß IEC 61508/IEC61511 und dem Erreichen von darin beschriebenen sogenannten Sicherheits-Integritäts-Levels (SIL), beispielsweise SIL 2 oder SIL3, muss eine Funktionsüberprüfung der Gasmessanordnung bzw. der Brennerregelung im Zusammenspiel mit dem Gassensor jedoch jederzeit und unabhängig von der Feuerungsanlage möglich sein.

Regelmäßige Funktionsüberprüfungen des Sensors sind allerdings aufwändig, da der Sensor hierzu z.B. ausgebaut, untersucht und auf Funktion getestet sowie gegebenenfalls mittels Prüfanlage mit Prüfgas hinsichtlich seines Messverhaltens überprüft werden müsste. Dadurch wird nicht nur der Brennerbetrieb beeinträchtigt. Dies bedeutet auch einen hohen Aufwand an Arbeitszeit und Materialkosten.

Es ist daher die der vorliegenden Erfindung zugrundeliegende Aufgabe, ein Verfahren zu schaffen, das eine von der Prozessanlage unabhängige Funktionsüberprüfung eines Festkörperelektrolyt-Gassensors auf einfache und unkomplizierte Weise erlaubt.

Die Aufgabe wird gelöst durch ein Verfahren mit den kennzeichnenden Merkmalen des Anspruchs 1.

Erfindungsgemäß wird in einem ersten Schritt ein stationäres Verhältnis der Partialdrücke der zur Ausbildung der Messspannungen führenden Gasbestandteile im Messgas und im Referenzgas herbeigeführt. In einem zweiten Schritt wird zwischen der Referenzelektrode und einer der beiden Messelektroden eine Spannung angelegt wird, die so hoch ist, dass sie an der betreffenden Messelektrode eine elektrochemische Reaktion bewirkt, aufgrund derer der Partialdruck wenigstens eines zur Ausbildung der Messspannung an der anderen der beiden Messelektroden führenden Gasbestandteils sich im Messgas und im Referenzgas bezogen auf das stationäre Ausgangsverhältnis ändert. In einem dritten Schritt wird eine Änderung der sich zwischen der Referenzelektrode und der anderen Messelektrode ausbildenden Messspannung zur Bewertung der Funktionsfähigkeit des Gassensors herangezogen.

Der erste Schritt ist der Ausgangszustand des Verfahrens. Gemäß einer vorteilhaften Ausführungsform des Verfahrens befindet sich im Ausgangszustand beispielsweise auf der Messgasseite und der Referenzgasseite Luft mit

21% $O_2$ - Anteil und ohne weitere brennbare Gasbestandteile in nennenswerter Konzentration. Dabei kann der Gassensor entweder ausgebaut sein, oder wenn er im Abgaskanal einer Feuerungsanlage eingebaut ist, kann der Ausgangszustand bei Brennerstillstand oder in der Vorlüftphase vor dem erneuten Brennerstart eingenommen werden. Die zur Ausbildung der Messspannungen führenden Gasbestandteile sind einmal $O_2$ und zum anderen unverbrannte Gasbestandteile. Im Ausgangszustand ist der $O_2$-Gehalt an der Messgasseite und an der Referenzgasseite gleich, bei 21%. Ebenfalls gleich ist der Gehalt an unverbrannten Gasbestandteilen, soweit in der Luft welche vorhanden sind, denn Luft mit identischer Zusammensetzung ist an der Messgasseite und an der Referenzgasseite vorhanden. Zwischen der ersten Messelektrode und der Referenzelektrode misst man lediglich eine geringe Offset-Spannung von wenigen mV.

In dem zweiten Schritt wird gemäß einer vorteilhaften Ausführungsform des Verfahrens zwischen einer der beiden Messelektroden und der Referenzelektrode eine Pumpspannung angelegt, die ausreichend groß ist, um Sauerstoff von der Messgasseite zur Referenzgasseite durch den Festelektrolyten zu pumpen, so dass an der Referenzgasseite Sauerstoff angereichert und an der Messgasseite Sauerstoff abgereichert wird. Die elektrochemische Reaktion, die dem zugrunde liegt, ist eine kathodische Reduktionsreaktion, wobei adsorbierte Sauerstoffatome an der Dreiphasengrenze zwischen der Elektrode, dem Festelektrolyten und dem Gasraum unter Aufnahme von 2 Elektronen zu $O^{2-}$ Ionen reduziert werden, als Ionen in den Festelektrolyten übergehen und dort zur Anode gepumpt werden. An der Dreiphasengrenze der Anode verlassen sie unter Abgabe der zwei Elektronen den Festelektrolyten, je zwei Sauerstoffatome rekombinieren zu einem $O_2$-Molekül und dieses desorbiert in den Referenzgasraum. Der Sauerstoffpartialdruck bildet sich dann an der Messgasseite und der Referenzgasseite unterschiedlich aus, an der Messgasseite wird er deutlich niedriger als 21%, an der Referenzgasseite wird er höher als 21%. Der Partialdruck des zur Ausbildung der Messspannung an der anderen der beiden Messelektroden führenden Gasbestandteils $O_2$ ändert sich also bezogen auf den Ausgangszustand.

An der anderen Messelektrode herrscht nun ein anderer $O_2$-Partialdruck als an der Referenzelektrode. Gemäß der Nernst-Gleichung bildet sich daher zwischen der anderen Messelektrode und der Referenzelektrode eine Messspannung aus, die sich deutlich von der Offset-Spannung unterscheidet, wenn der Gassensor in Ordnung ist. Wenn der Gassensor also funktionstüchtig ist, wird sich aufgrund des unterschiedlichen Sauerstoffpartialdrucks im dritten Schritt zwischen der zweiten Messelektrode und der Referenzelektrode ein Messpotential einstellen, etwa gemäß der an sich bekannten Nernst-Gleichung proportional zum Logarithmus des Verhältnisses aus den Sauerstoffpartialdrücken an der Messgasseite und der Referenzgasseite. Wird, ausgehend von dem Ausgangszustand, bei Anlegen einer entsprechenden Pumpspannung an die erste Messelektrode zwischen der zweiten Messelektrode und der Referenzelektrode ein deutliches Messsignal festgestellt, oder eine deutliche Änderung des Messsignals, so ist der Gassensor sehr wahrscheinlich in Ordnung. Bei Ausbleiben einer deutlichen Messsignaländerung ist sehr wahrscheinlich der Gassensor nicht in Ordnung. Dann muss durch weitere Diagnose und ggf. Ausbau des Sensors mit anschließender Untersuchung festgestellt werden, ob die Pumpelektrode defekt ist, oder die Messelektrode, oder beide.

Die eine der beiden Messelektroden wird gemäß dem erfindungsgemäßen Verfahren in dieser Ausführungsform als Pumpelektrode betrieben, die andere Messelektrode als Messelektrode. Durch das $O_2$-Pumpen verändert sich das $O_2$-Partialdruckverhältnis zwischen Messgasseite und Referenzgasseite so, dass die gemessene Sensorspannung gemäß der Nernst-Gleichung zunimmt, und zwar in den steileren Bereich der logarithmischen Kennlinie. Wenn nach einiger Zeit des O2-Pumpens ein solch deutlicher Signalhub der Messspannung an der zweiten Messelektrode erfasst werden kann, ist das ein sicheres Indiz dafür, dass der Gassensor funktionstüchtig ist.

Dieser erfindungsgemäße Funktionstest kann gemäß einer vorteilhaften Ausführungsform auch im eingebauten Zustand der Sonde im Abgaskanal im Betrieb der Feuerungsanlage, durchgeführt werden. Der stationäre Ausgangszustand gemäß dem ersten Verfahrensschritt ist dann ein Zustand, in dem an der Referenzgasseite Luft anliegt und an der Messgasseite ein Abgas mit einem von Luft abweichenden O2-Gehalt, der aber weitgehend stationär ist und sich somit an der anderen Messelektrode eine Messspannung einstellt, die sich von der Offset-Spannung unterscheidet, aber sich stationär verhält, in dem sich das Messsignal also stationär verhält. Gemäß einer vorteilhaften Ausführungsform ist dabei ausreichend $O_2$ auf der Messgasseite vorhanden.

Sollte dies nicht der Fall sein, sollte also nicht ausreichend $O_2$ auf der Messgasseite vorhanden sein, so dass nicht genug $O_2$ von der Messgasseite zu der Referenzgasseite gepumpt werden kann, so kann gemäß einer vorteilhaften Ausführungsform die Pumprichtung auch umgekehrt werden, das heißt, $O_2$ wird von der Referenz- zur Messgasseite gepumpt. Durch die Abreicherung von $O_2$ auf der Referenz- und Anreicherung auf der Messgasseite wird auch hier eine deutliche Signaländerung des Messsignals festzustellen sein.

Gemäß einer vorteilhaften Ausführungsform kann der zweite und dritte Schritt wiederholt werden, wobei bei der zweiten Durchführung die andere Messelektrode zur Pumpelektrode wird und die Messsignaländerung an der ersten Messelektrode festgestellt wird, um auf die Funktionstüchtigkeit des Gassensors zu schließen. So kann in einer vorteilhaften Ausführungsform des Verfahrens bei der ersten Durchführung der Schritte 2 und 3 die COe-Elektrode als Pumpelektrode geschaltet sein und die O2-Elektrode als Messelektrode um die erwartete Messsignaländerung festzustellen. Bei der erneuten Durchführung der Verfahrensschritte 2 und 3 wird dann die O2-Elektrode als Pumpelektrode geschaltet und die COe-Elektrode ist die Messelektrode, um die erwartete Messsignaländerung festzustellen.

In einer weiteren vorteilhaften Ausführungsform des Verfahrens ist die Spannung, die zwischen der ersten Messelektrode, hier dann der O2-Elektrode, und der Referenzelektrode angelegt wird, wenigsten so hoch wie die Zersetzungsspannung von H2O, also mindestens ca. 1,23mV. H2O-Moleküle aus dem in der Luft oder dem Brennerabgas vorhandenen Wasserdampf werden dadurch in H2 und ½ 02 aufgespalten. Der frei werdende Wasserstoff wird mit der COe-Elektrode gemessen und führt dort zu einem deutlichen Signalanstieg. Die elektrochemische Reaktion in dieser Ausführungsform des Verfahrens ist also eine elektrochemische Zersetzungsreaktion eines Bestandteils des Messgases. Aufgrund der Zersetzung ändert sich der Partialdruck von $H_2$ als einem der zur Ausbildung der Messspannung an der anderen Messelektrode führenden Gasbestandteil.

Das erfindungsgemäße Verfahren erlaubt es, eine Funktionsüberprüfung des Gassensors jederzeit auch automatisch und unabhängig von der Prozessanlage, in der der Gassensor eingebaut ist, vorzunehmen. Die Funktionsüberprüfung kann unabhängig von der Einbaubedingung des Gassensors erfolgen, also sowohl wenn der Gassensor in einem Abgasrohr oder in einer Prozesskammereingebaut ist, als auch wenn er sich außerhalb befindet.

Anhand der Zeichnungen, in der zwei Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigt:

Figur 1: eine schematische Darstellung einer Verschaltung eines Gassensors zur Durchführung einer ersten Ausführungsform des Verfahrens,

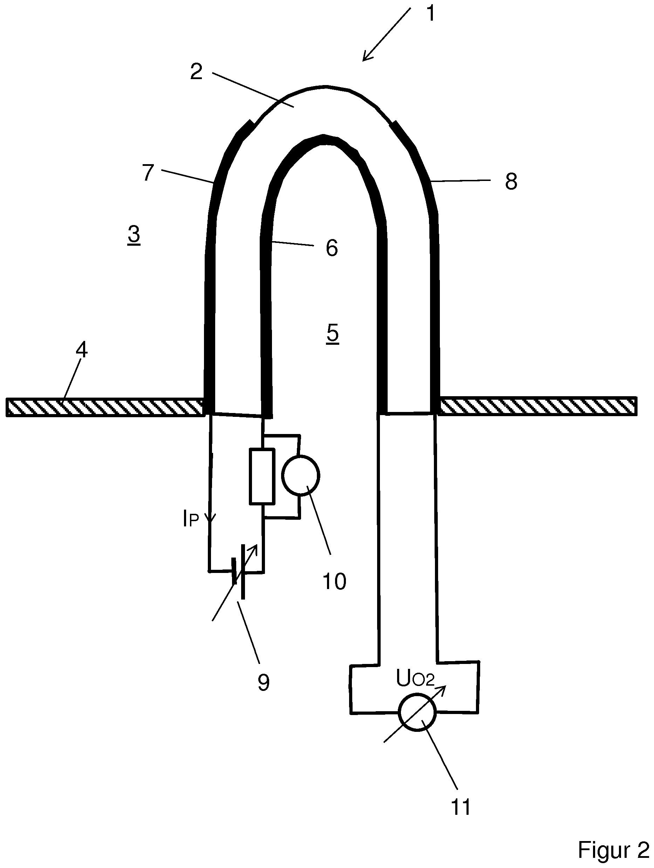

Figur 2: eine schematische Darstellung einer Verschaltung eines Gassensors zur Durchführung einer zweiten Ausführungsform des Verfahrens,,

Figur 3: eine schematische Darstellung von Messkurven zur Erläuterung des Verfahrens.

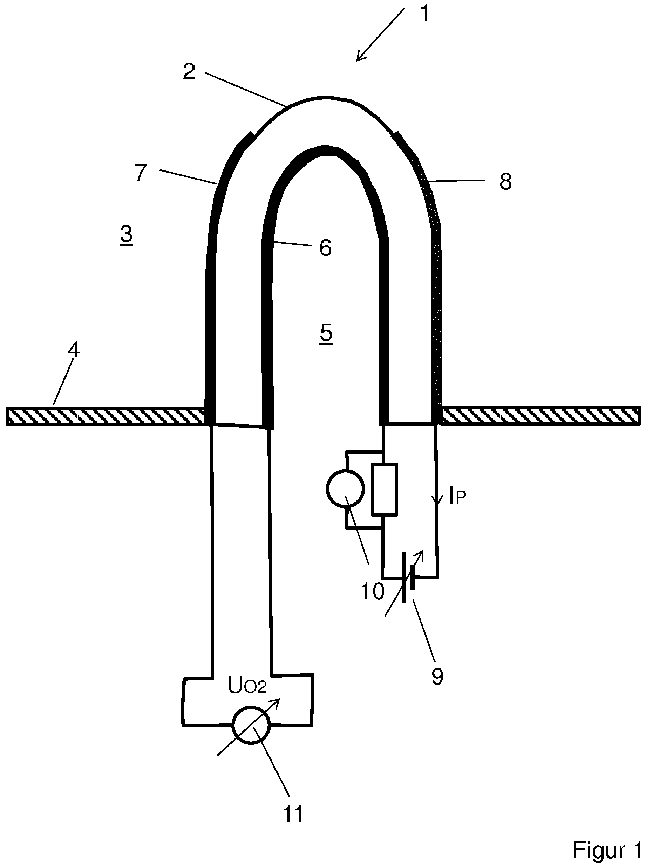

Es werde zunächst die Figur 1 betrachtet. Figur 1 zeigt schematisch und beispielhaft ein Gassensorelement 1 mit einem O2-Ionenleitenden Festelektrolyten aus Yttriumstabilisierter Zirkondioxid-Keramik in Form eines einseitig geschlossenen Rohres 2. Mit seiner geschlossenen Seite ragt das Festelektrolyt-Rohr 2 in den Messgasraum 3. An seinem offenen Ende ist das Festelektrolyt-Rohr 2 in seiner Einbauarmatur, diese ist hier nicht dargestellt, gasdicht in eine Trennwand 4 eingebaut, die den Messgasraum 3 von dem Referenzgasraum 5 trennt. Der Messgasraum 3 könnte der Abgaskanal einer Feuerungsanlage sein. Der Messgasraum 3 könnte auch Umgebungsluft sein, wenn der Gassensor aus dem Abgasrohr ausgebaut ist. Der Referenzgasraum 5 könnte in beiden Fällen Umgebungsluft sein. Im ausgebauten Zustand des Sensors wären dann Messgasraum und Referenzgasraum derselbe Gasraum.

An der Innenseite des Zirkondioxid-Rohres 2, an der Referenzgasseite, ist eine Referenzelektrode 6 aus Platin aufgebracht.

An der Außenseite des Zirkondioxid-Rohres 2, an der Messgasseite, ist eine erste Messelektrode 7 aus Platin angebracht, die katalytisch aktive O2-Elektrode. Beabstandet davon ist eine zweite Messelektrode 8 aus einer Platin-Gold-Legierung angebracht, die katalytisch weniger aktive COe-Elektrode.

Zwischen der zweiten Messelektrode 8 und der Referenzelektrode 6 ist eine regelbare Spannungsquelle 9 geschaltet. Der Strom, der bei Anlegen einer Spannung zwischen der zweiten Messelektrode 8 und der Referenzelektrode 6 fließt, wird mittels einer Messvorrichtung 10 erfasst.

Zwischen der ersten Messelektrode 7 und der Referenzelektrode 6 ist ein Spannungsmessgerät 11 mit hohem Innenwiderstand geschaltet, um die sich dort ausbildende Messspannung zu erfassen.

Nicht dargestellt in der Figur ist ein Heizelement mit der entsprechenden Energieversorgung und Ansteuerung, das nötig ist, um den Festelektrolyten auf seine Arbeitstemperatur zu bringen, auf der er erst $O_2$-Ionenleitend wird.

Die zwischen der COe-Elektrode 8 und der Referenzelektrode 6 angelegte Spannung wirkt als Pumpspannung, diese treibt den Pumpstrom Ip durch den Festelektrolyten 2.

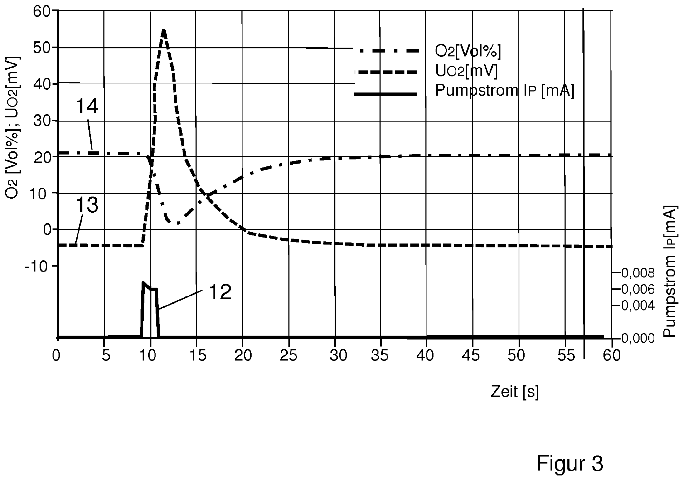

Figur 3 zeigt exemplarisch den zeitlichen Verlauf des Pumpstroms $I_P$, siehe Kurve 12 in Figur 3, und den resultierenden Verlauf der an dem Spannungsmessgerät 11 registrierten Messspannung $U_{O2}$ zwischen der $O_2$-Elektrode 7 und der Referenzelektrode, siehe Kurve 13 in Figur 3, in einer beispielhaften und lediglich exemplarisch gezeigten Ausführungsform des erfindungsgemäßen Verfahrens.

Im Ausgangszustand, zwischen der Zeit 0s und ca. 8s, befindet sich sowohl im messgasraum als auch im Referenzgasraum Luft mit 21% $O_2$, es liegt keine Pumpspannung zwischen der COe-Elektrode 8 und der Referenzelektrode 6 an, der Pumpstrom $I_P$ ist 0mA. Die Messspannung $U_{O2}$ ist auf dem stationären Offset-Wert von ca. -4mV. Dies entspricht einem rechnerischen O2-Gehalt im Messgas von 21%, siehe Kurve 14 in Figur 3.

Zum Zeitpunkt 8s wird für ca. 3s die Pumpspannung angeschaltet, es fließt ein Pumpstrom von ca. 0,006mA. Der Pumpstrom $I_P$ pumpt Sauerstoff von der Messgasseite zur Referenzgasseite. Somit ändert sich das Partialdruckverhältnis $p_{O2,ref}/p_{O2,mess}$ in der Nernstgleichung [Gl. 1] in Richtung kleinere Verhältnisse.

$$U_{O2} = U_0 + RT/4F \times \ln(p_{O2,ref}/p_{O2,mess}) \qquad \text{[Gl. 1]}$$

Damit steigt die Nernstspannung $U_{O2}$ an und ein aus der Nernstspannung $U_{O2}$ zurückgerechneter $O_2$-Gehalt reduziert sich entsprechend. Insbesondere steigt $U_{O2}$ von hier im Beispiel von -5,3 mV (dies entspricht der Offsetspannung $U_0$) auf 85mV an. Dementsprechend sinkt der daraus errechnete $O_2$-Gehalt von 21 Vol% bei $U_P=0V$ (d.h. ohne Pumpspannung) auf 0,3 Vol% bei $U_P= 1,5V$ ab.

An der messgasseitigen Elektrode 8 wird durch den Pumpstrom $I_P$ Sauerstoff abgereichert, an der referenzgasseitigen Elektrode 6 wird durch den Pumpstrom $I_P$ Sauerstoff angereichert.

Zum Zeitpunkt ca. 11s wird die Pumpspannung wieder abgeschaltet, der Pumpstrom IP geht wieder auf 0mA zurück. Durch diffusive Ausgleichsvorgänge kommt es langsam wieder zu einem Angleichen der Sauerstoffpartialdrücke auf der Messgas- und der Referenzgasseite. Nach ca. 60s ist der Ausgangszustand wieder erreicht.

Das in der Figur 3 gezeigte Signalverhalten der Messspannung zwischen der 02-Elektrode 7 und der Referenzelektrode 6 inReaktion auf einen kurzen Pumpstromimpuls zwischen der COe-Elektrode 8 und der Referenzelektrode 6 ist ein Indiz für eine funktionstüchtige O2-Elektrode 7.

Um auch die COe-Elektrode auf Funktionstüchtigkeit zu prüfen, wird bei einer Wiederholung der Testsequenz nach Figur 3 die Pumpspannung zwischen der O2-Elektrode 7 und der Referenzelektrode 6 angelegt, und die Messspannung wird zwischen der COe-Elektrode 8 und der Referenzelektrode 6 erfasst. Wenn die COe-Elektrode in Ordnung ist, stellt sich ein Messkurvenverlauf entsprechend dem in der Figur 3 gezeigten ein.

Im Umkehrschluss ist ein Ausbleiben eines Messsignalverlaufs entsprechend der Kurve 13 in Figur als Reaktion auf einen Pumpstrompuls gemäß Kurve 12 in Figur 3 ein Indiz für eine fehlerhafte Elektrode und damit für einen fehlerhaften Sensor insgesamt.

Bezugszeichenliste

1 Gassensorelement
2.. Festelektrolyt-Rohr
3 Messgasraum
4 Trennwand
5 Referenzgasraum
6 Referenzelektrode
7 erste Messelektrode, $O_2$-Elektrode.
8 zweite Messelektrode, COe-Elektrode
9 regelbare Spannunngsquelle
10 Messvorrichtung
11 Spannungsmessgerät
12 Pumpstrom-Kurve
13 $U_{O2}$-Kurve
14 $O_2$-Kurve
$I_P$ Pumpstrom

**Patentansprüche**

**1.** Verfahren zur Funktionsüberprüfung eines Gassensors (1) in einem Messgasraum (3), wobei als Gassensor (1) ein Aufbau mit einem den Messgasraum (3) von einem Referenzgasraum (5) trennenden Festelektrolyten (2), einer ersten und einer zweiten Messelektrode (7, 8), die beide messgasseitig auf dem Festelektrolyten (2) aufgebracht sind, und einer Referenzelektrode (6), die referenzgasseitig auf dem Festelektrolyten (2) aufgebracht ist, verwendet wird, wobei eine erste Messspannung zwischen der ersten Messelektrode (7) und der Referenzelektrode (6) erfassbar ist, die abhängt von dem Verhältnis der Partialdrücke eines ersten Gasbestandteils an der Messgasseite (3) und der Referenzgasseite (5), wobei eine zweite Messspannung zwischen der zweiten Messelektrode (8) und der Referenzelektrode (6) erfassbar ist , die abhängt von dem Partialdruck eines oder mehrerer Gasbestandteile des Messgases, **dadurch gekennzeichnet, dass**

- in einem ersten Schritt ein stationäres Verhältnis der Partialdrücke der zur Ausbildung der Messspannungen führenden Gasbestandteile im Messgas und im Referenzgas herbeigeführt wird,

- in einem zweiten Schritt zwischen der Referenzelektrode (6) und einer der beiden Messelektroden (8, 7) eine Spannung angelegt wird, die so hoch ist, dass sie an der betreffenden Messelektrode (8, 7) eine elektrochemische Reaktion bewirkt, aufgrund derer der Partialdruck wenigstens eines zur Ausbildung der Messspannung an der anderen der beiden Messelektroden (7, 8) führenden Gasbestandteils sich im Messgas und im Referenzgas bezogen auf das stationäre Ausgangsverhältnisändert, und

- in einem dritten Schritt eine Änderung der sich zwischen der Referenzelektrode (6) und der anderen Messelektrode (7, 8) ausbildenden Messspannung zur Bewertung der Funktionsfähigkeit des Gassensors (1) herangezogen wird.

2. Verfahren nach Anspruch 1, **dadurch gekennzeichnet, dass** sich im Ausgangszustand auf der Messgasseite und der Referenzgasseite Luft mit 21% $O_2$-Anteil befindet.

3. Verfahren nach Anspruch 1, **dadurch gekennzeichnet, dass** das Verfahren mit einem im Abgaskanal einer Feuerungsanlage eingebauten Gassensor (1) während des Betriebs der Feuerungsanlage durchgeführt wird.

4. Verfahren nach Anspruch 1, **dadurch gekennzeichnet, dass** zwischen einer der beiden Messelektroden (7, 8) und der Referenzelektrode (6) eine Pumpspannung angelegt wird, die ausreichend groß ist, um Sauerstoff von der Messgasseite (3) zur Referenzgasseite (5) durch den Festelektrolyten (2) zu pumpen, so dass an der Referenzgasseite (5) Sauerstoff angereichert und an der Messgasseite (3) Sauerstoff abgereichert wird.

5. Verfahren nach Anspruch 1, **dadurch gekennzeichnet, dass** zwischen der Referenzelektrode (6) und einer der beiden Messelektroden (7, 8) eine Pumpspannung angelegt wird, die ausreichend groß ist, um Sauerstoff von der Referenzgasseite (5) zur Messgasseite (3) durch den Festelektrolyten (2) zu pumpen, so dass an der Messgasseite (3) Sauerstoff angereichert und an der Referenzgasseite (5) Sauerstoff abgereichert wird.

6. Verfahren nach Anspruch 1, **dadurch gekennzeichnet, dass** der zweite und dritte Schritt wiederholt werden, wobei bei der zweiten Durchführung die jeweils andere Messelektrode zur Pumpelektrode wird und die Messsignaländerung an der ersten Messelektrode festgestellt wird, um auf die Funktionstüchtigkeit des Gassensors zu schließen.

7. Verfahren nach Anspruch 1, **dadurch gekennzeichnet, dass** die elektrochem sehe Reaktion eine elektrochemische Zersetzungsreaktion eines Bestandteils des Messgases ist, wobei sich aufgrund der Zersetzung der Partialdruck eines zur Ausbildung der Messspannung an der anderen Messelektrode führenden Gasbestandteils im Messgas ändert.

8. Verfahren nach Anspruch 1, **dadurch gekennzeichnet, dass** der Festelektrolyt ein Sauerstoffionenleitender Zirkoniumdioxid-Festelektrolyt ist.

9. Verfahren nach einem der vorigen Ansprüche, **dadurch gekennzeichnet, dass** die erste Messelektrode (7) eine katalytisch aktive Platinelektrode ist, und dass die zweite Messelektrode (8) eine Platinelektrode mit reduzierter katalytischer Aktivität ist.

**Claims**

1. A method for functional testing of a gas sensor (1) in a measuring gas space (3), wherein as a gas sensor (1) a structure is used with a solid electrolyte (2) separating the measuring gas space (3) from a reference gas space (5), the structure further having a first and a second measuring electrode (7, 8), both of which are mounted on the measurement gas side of the solid electrolyte (2), and a reference electrode (6), which is applied to the reference gas side of the solid electrolyte (2), wherein a first measuring voltage can be detected between the first measuring electrode (7) and the reference electrode (6), which first measuring voltage depends on the ratio of the partial pressures of a first gas constituent at the measuring gas side (3) and at the reference gas side (5), wherein a second measuring voltage is detectable between the second measuring electrode (8) and the reference electrode (6), which second measuring voltage depends on the partial pressure of one or more gas constituents of the measuring gas, **characterized in that**

   - in a first step, a stationary ratio of the partial pressures of the gas components leading to the formation of the measuring voltages in the measuring gas and in the reference gas is brought about,
   - in a second step a voltage is applied between the reference electrode (6) and one of the two measuring electrodes (8, 7) which is so high that it causes an electrochemical reaction at the respective measuring electrode (8, 7), as a consequence of which the partial pressure of at least one gas constituent leading to the formation of the measuring voltage at the other of the two measuring electrodes (7, 8) changes in the measuring gas and in the reference gas relative to the stationary output ratio, and

- In a third step, a change in the measuring voltage forming between the reference electrode (6) and the other measuring electrode (7,8) is used for assessing the functionality of the gas sensor (1).

2. The method according to claim 1, **characterized in that** in the initial state there is air with 21% 02-share on the measurement gas side and the reference gas side.

3. The method according to claim 1, **characterized in that** the method is carried out with a gas sensor (1) built-in the exhaust gas duct of a furnace during operation of the furnace.

4. The method according to claim 1, **characterized in that** between one of the two measuring electrodes (7, 8) and the reference electrode (6) a pumping voltage is applied which is sufficiently large to pump oxygen from the measuring gas side (3) to the reference gas side (5) through the solid electrolyte (2), so that oxygen is enriched at the reference gas side (5) and oxygen is depleted at the measuring gas side (3).

5. The method according to claim 1, **characterized in that** between the reference electrode (6) and one of the two measuring electrodes (7, 8) a pumping voltage is applied, which is sufficiently large to pump oxygen from the reference gas side (5) to the measuring gas side (3) through the solid electrolyte (2) so that oxygen is enriched on the measuring gas side (3) and oxygen is depleted at the reference gas side (5).

6. The method according to claim 1, **characterized in that** the second and third steps are repeated, wherein in the repeated implementation, the respectively other measuring electrode becomes the pumping electrode and the change of the measuring signal is determined at the first measuring electrode in order to determine the functioning of the gas sensor.

7. The method according to claim 1, **characterized in that** the electrochemical reaction is an electrochemical decomposition reaction of a component of the measurement gas, which changes due to the decomposition of the partial pressure of such a gas component in the measurement gas which leads to the formation of the measurement voltage at the other measuring electrode.

8. The method according to claim 1, **characterized in that** the solid electrolyte is an oxygen ion-conducting zirconia solid electrolyte.

9. The method according to any one of the preceding claims, **characterized in that** the first measuring electrode (7) is a catalytically active platinum electrode, and that the second measuring electrode (8) is a platinum electrode with reduced catalytic activity.

**Revendications**

1. Procédé de test fonctionnel d'un capteur de gaz (1) dans un espace à gaz de mesure (3), utilisant comme capteur de gaz (1) structure avec un électrolyte solide (2) séparant un espace à gaz de mesure (3) d'un espace à gaz de référence (5), avec une première et une deuxième électrode de mesure (7, 8), toutes deux montées sur le côté gaz mesuré de l'électrolyte solide (2), et une électrode de référence (6) appliqué à l'électrolyte solide (2) au côté gaz de référence, une première tension de mesure peut être détectée entre la première électrode de mesure (7) et l'électrode de référence (6), ce qui dépend de la relation des pressions partielles d'un premier composant de gaz au côté gaz de mesure (3) et au côté gaz de référence (5), et une seconde tension de mesure est détectable entre la seconde électrode de mesure (8) et l'électrode de référence (6), qui dépend de la pression partielle d'un ou de plusieurs composants du gaz de mesure, **caractérisé en ce que** dans une première étape, on obtient une relation stationnaire des pressions partielles des composants du gaz conduisant à la formation des tensions de mesure dans le gaz de mesure et dans le gaz de référence,

- dans une seconde étape on applique entre l'électrode de référence (6) et l'une des deux électrodes de mesure (8, 7) une tension tellement élevée qu'elle provoque une réaction électrochimique au niveau de l'électrode de mesure respective (8, 7) en raison de cette tension la pression partielle d'au moins un constituant du gaz conduisant à la formation de la tension à l'autre des deux électrodes de mesure (7, 8) se varie dans le gaz de mesure et dans le gaz de référence par rapport de la relation initiale stationnaire, et
- dans une troisième étape, on utilise un changement de la tension de mesure se formant entre l'électrode de référence (6) et l'autre électrode de mesure (7,8) pour évaluer la fonctionnalité du capteur de gaz (1).

**2.** Procédé selon la revendication 1, **caractérisé en ce que**, à l'état initial il y a l'air contient 21% de 02 - part du côté des gaz mesurés et du côté des gaz de référence.

**3.** Procédé selon la revendication 1, **caractérisé en ce que** le procédé est réalisé avec un capteur de gaz incorporé d'un conduit de gaz d'échappement de four (1) pendant le fonctionnement du four.

**4.** Procédé selon la revendication 1, **caractérisé en ce qu**'entre une des deux électrodes de mesure (7, 8) et l'électrode de référence (6) est appliquée une tension de pompage suffisamment forte pour pomper de l'oxygène du côté gaz de mesure (3) au côté gaz de référence (5) à travers l'électrolyte solide (2), de sorte que l'oxygène soit enrichi du côté du gaz de référence (5) et que l'oxygène soit épuisé du côté du gaz de mesure (3).

**5.** Procédé selon la revendication 1, **caractérisé en ce qu**'entre l'électrode de référence (6) et l'une des deux électrodes de mesure (7, 8) est appliquée une tension de pompage suffisamment forte pour pomper de l'oxygène du côté gaz de référence (5) au côté gaz de mesure (3) à travers l'électrolyte solide (2) de sorte que l'oxygène soit enrichi du côté gaz de mesure (3) et que l'oxygène soit épuisé du côté du gaz de référence (5).

**6.** Procédé selon la revendication 1, **caractérisé en ce que** les deuxième et troisième étapes sont répétées, et que dans le deuxième mode de réalisation, l'électrode de mesure respectivement l'autre devient l'électrode de pompage et le changement du signal de mesure est déterminé au niveau de la première électrode de mesure pour conclure au fonctionnement du capteur de gaz.

**7.** Procédé selon la revendication 1, **caractérisé en ce que** la réaction électrochimique est une réaction de décomposition électrochimique d'un composant du gaz de mesure, et que la pression partielle d'une composant de gaz de mesure, qui mène à la formation de la tension de mesure à l'autre électrode de mesure, change au raison de cette décomposition.

**8.** Procédé selon la revendication 1, **caractérisé en ce que** l'électrolyte solide est un électrolyte solide en zircone conducteur d'ions oxygène.

**9.** Procédé selon l'une quelconque des revendications précédentes, **caractérisé en ce que** la première électrode de mesure (7) est une électrode de platine catalytiquement active, et **en ce que** la seconde électrode de mesure (8) est une électrode de platine à activité catalytique réduite.

Figur 1

Figur 2

Figur 3

**IN DER BESCHREIBUNG AUFGEFÜHRTE DOKUMENTE**

**In der Beschreibung aufgeführte Patentdokumente**

- DE 4428954 C2

**In der Beschreibung aufgeführte Nicht-Patentliteratur**

- Sonderdruck aus Gaswärme International. Aufsatz CO-Regelung. Vulkan-Verlag GmbH, Juli 2003, 448-450